(19) Europäisches Patentamt
European Patent Office
Office européen des brevets

(11) EP 1 108 863 A2

(12) **EUROPEAN PATENT APPLICATION**

(43) Date of publication:
20.06.2001 Bulletin 2001/25

(51) Int Cl.$^7$: **F01N 3/20**

(21) Application number: 00127386.1

(22) Date of filing: 13.12.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: 15.12.1999 JP 35660299

(71) Applicant: **Nissan Motor Co., Ltd.**
**Yokohama-shi, Kanagawa 221-0023 (JP)**

(72) Inventors:
• **Hanaki, Yasunari**
**Yokosuka-shi, Kanagawa 239-0813 (JP)**
• **Suga, Katsuo**
**Yokohama-shi, Kanagawa 236-0032 (JP)**

(74) Representative: **Weber, Joachim, Dr.**
**Hoefer, Schmitz, Weber & Partner**
**Patentanwälte**
**Gabriel-Max-Strasse 29**
**81545 München (DE)**

(54) **Catalyst system for purifying exhaust gas**

(57) An exhaust gas purifying system for an automotive internal combustion engine which discharges oxygen-excessive exhaust gas under lean-burn operation. The exhaust gas purifying system comprises a NOx reducing catalyst for reducing NOx in the presence of at least hydrogen serving as reducing agent. The NOx reducing catalyst is disposed in an exhaust gas passageway of the engine. The NOx reducing catalyst includes a porous substrate, and platinum and cesium carried on the porous substrate. A catalyst is disposed in the exhaust gas passageway in order to produce hydrogen so as to enrich the oxygen-excessive exhaust gas with hydrogen before the oxygen-excessive exhaust gas reaches the NOx reducing catalyst. The oxygen-excessive exhaust gas enriched with hydrogen is introduced through the exhaust gas passageway to the NOx reducing catalyst. Here, the oxygen-excessive exhaust gas enriched with hydrogen is brought into contact with the NOx reducing catalyst under a condition in which temperature of at least one of the NOx reducing catalyst and the oxygen-excessive exhaust gas enriched with hydrogen is within a range of from 250 to 600 °C.

# FIG.1

EP 1 108 863 A2

**Description**

BACKGROUND OF THE INVENTION

This invention relates to improvements in an exhaust gas purifying system for purifying exhaust gas discharged from an internal combustion engine, a furnace, a burner or the like, and more particularly to the exhaust gas purifying system for effectively reducing nitrogen oxides (NOx) in oxygen-excessive exhaust gas discharged from the engine under lean-burn operation.

Hitherto three-way catalysts for simultaneously oxidizing carbon monoxide (CO) and hydrocarbons (HC) and reducing nitrogen oxides (NOx) have been extensively used as exhaust gas purifying catalysts installed to internal combustion engines of automotive vehicles and the like. However, such catalysts cannot reduce NOx particularly when exhaust gas of the engine is oxygen-excessive (i.e., has an air-fuel ratio leaner than stoichiometric value). In this regard, Japanese Patent No. 2600492 discloses a so-called rich spike process as a method of reducing NOx when exhaust gas of the engine is oxygen-excessive. In this method, NOx is trapped when exhaust gas takes an oxygen-excessive or lean atmosphere (having the air-fuel ratio leaner than the stoichiometric value), and then the trapped NOx is released and reduced by temporarily lowering an oxygen concentration of exhaust gas so that exhaust gas takes a rich atmosphere (having the air-fuel ratio richer than the stoichiometric value).

SUMMARY OF THE INVENTION

Drawbacks have been encountered in the above NOx reducing method using the rich spike process, as set forth below. That is, the NOx reducing method requires to periodically lower the oxygen concentration in exhaust gas in an engine operating region where exhaust gas takes the oxygen-excessive atmosphere. Additionally, in order to make reduction reaction of NOx under a condition where the oxygen concentration has been lowered, it is required to supply a large amount of HC and CO as reducing agents. This makes it impossible to obtain fuel economy improvement effect due to vehicle running on oxygen-excessive air-fuel mixture having an air-fuel ratio leaner than the stoichiometric value.

Additionally, in the above NOx reducing method, the catalyst contains a large amount of alkali metal and alkaline earth metal for the purpose of trapping NOx in the oxygen-excessive atmosphere of exhaust gas, and therefore a catalytic activity (for oxidation) of platinum and rhodium cannot be sufficiently exhibited when exhaust gas is low in temperature. Furthermore, in order to sufficiently oxidize or remove HC and CO components which have not been consumed under NOx reduction reaction, it is required to oxidize or remove the components by making oxidation reaction on the NOx reducing catalyst, or otherwise by a three-way catalyst disposed downstream of the NOx reducing catalyst for reducing NOx.

However, such the NOx reducing catalyst or the three-way catalyst disposed downstream of the NOx reducing catalyst are located considerably far from the engine, and therefore the temperature of exhaust gas flown to the catalysts are unavoidably lowered, thereby making it impossible to exhibit a sufficient oxidizing performance for HC and CO. Particularly immediately after engine starting, sufficient oxidation of HC and CO is difficult to be made. Additionally, when HC and CO components in exhaust gas are increased lowering an oxygen concentration in exhaust gas and reducing NOx as discussed above, it is impossible to make vehicle running under lean-burn operation, thereby exhibiting an insufficient fuel economy improvement effect.

Further, Japanese Patent Provisional Publication No. 63-100919 discloses the following technique: A catalyst includes a catalytic metal such as copper or the like carried on a carrier formed of a metal oxide such as alumina or the like. By causing exhaust gas containing hydrocarbons to be brought into contact with the catalyst using hydrocarbons (HC) as reducing agent, nitrogen oxides in exhaust gas can be reduced to be removed under the oxygen-excessive atmosphere. However, according to this technique, hydrocarbons are used as the reducing agent, and therefore chemical reaction rate for reduction of nitrogen oxides is low. This requires a large volume of the catalyst. It will be understood that mounting the large volume catalyst on a movable body such as an automotive vehicle is not practical.

Furthermore, usually in order to remove nitrogen oxides contained in the oxygen-excessive exhaust gas emitted from a large-scale plant such as a factory, the following technique has been conventionally used: Exhaust gas containing nitrogen oxides are brought into contact with a vanadium-titania catalyst using ammonia (NHs) as reducing agent so as to reduce nitrogen oxides. However, according to this technique using ammonia as the reducing agent, ammonia itself is noxious, and additionally it is difficult to supply and store ammonia in a small scale facility such as an automotive vehicle.

Additionally, Japanese Patent Provisional Publication No. 5-168856 discloses such a technique that exhaust gas containing nitrogen oxides and oxygen gas is supplied with hydrogen produced by electrolysis of water vapor by using a solid electrolyte and brought into contact with a catalyst containing platinum carried on a carrier formed of alumina, silica, zeolite or the like. However, according to this technique, the temperature range where nitrogen oxides can be effectively reduced is so low as to be from 60 to 130 °C.

Moreover, Japanese Patent Provisional Publication No. 8-10574 discloses the following technique for removing nitrogen oxides: Exhaust gas is oxygen-excessive and therefore has an oxygen concentration higher than a stoichiometric value to oxidize oxidizable components in exhaust gas. In order to reduce nitrogen oxides contained in such oxygen-excessive exhaust gas, the oxygen-excessive exhaust gas containing hydrogen is brought into contact with a reducing catalyst (for nitrogen oxides) containing noble metal element and molybdenum carried on a porous carrier. However, according to this technique using the reducing catalyst, the temperature range where nitrogen oxides can effectively reduced are from 90 to 250 °C. Therefore, nitrogen oxides cannot be effectively reduced in a temperature range higher than the above temperature range.

It is, therefore, an object of the present invention is to provide an improved exhaust gas purifying catalyst which can effectively overcome drawbacks encountered in conventional techniques for reducing NOx in exhaust gas.

Another object of the present invention is to provide an improved exhaust gas purifying system which can effectively remove NOx, HC and CO in the oxygen excessive exhaust gas under a high temperature condition higher than 250 °C while obtaining a high fuel economy improvement effect.

An aspect of the present invention resides in an exhaust gas purifying system comprising a NOx reducing catalyst for reducing NOx in the presence of at least hydrogen serving as reducing agent. The NOx reducing catalyst is disposed in an exhaust gas passageway of a combustion device. The NOx reducing catalyst includes a porous substrate, and platinum and cesium carried on the porous substrate. A device is provided to enrich oxygen-excessive exhaust gas with hydrogen before the oxygen-excessive exhaust gas reaches the NOx reducing catalyst, the oxygen-excessive exhaust gas enriched with hydrogen being introduced through the exhaust gas passageway to the NOx reducing catalyst. Here, the oxygen-excessive exhaust gas enriched with hydrogen is brought into contact with the NOx reducing catalyst under a condition in which temperature of at least one of the NOx reducing catalyst and the oxygen-excessive exhaust gas enriched with hydrogen is within a range of from 250 to 600 °C.

Another aspect of the present invention resides in a exhaust gas purifying system for an internal combustion engine, comprising a NOx reducing catalyst for reducing NOx in the presence of at least hydrogen serving as reducing agent. The NOx reducing catalyst is disposed in an exhaust gas passageway of the engine. The NOx reducing catalyst includes a porous substrate, and platinum and cesium carried on the porous substrate. At least one of a control unit for controlling engine operating parameters of the engine and a catalyst disposed in the exhaust gas passageway upstream of the NOx reducing catalyst are provided. The control unit and catalyst are arranged to enrich oxygen-excessive exhaust gas with hydrogen before the oxygen-excessive exhaust gas reaches the NOx reducing catalyst, the oxygen-excessive exhaust gas enriched with hydrogen being introduced through the exhaust gas passageway to the NOx reducing catalyst. Here, the oxygen-excessive exhaust gas enriched with hydrogen is brought into contact with the NOx reducing catalyst under a condition in which temperature of at least one of the NOx reducing catalyst and the oxygen-excessive exhaust gas enriched with hydrogen is within a range of from 250 to 600 °C.

A further aspect of the present invention resides in a catalyst for reducing NOx in an exhaust gas purifying system including a device for enriching oxygen-excessive exhaust gas with hydrogen, the oxygen-excessive exhaust gas flowing through an exhaust gas passageway of a combustion device. The NOx reducing catalyst functions in the presence of at least hydrogen, serving as reducing agent, which is in the oxygen-excessive exhaust gas enriched with hydrogen. The NOx reducing catalyst is disposed in the exhaust gas passageway and includes a porous substrate, and platinum and cesium carried on the porous substrate in a mol ratio of cesium / platinum $\geq 0.5 / 1$. Here, the oxygen-excessive exhaust gas enriched with hydrogen is brought into contact with the NOx reducing catalyst under a condition in which temperature of at least one of the NOx reducing catalyst and the oxygen-excessive exhaust gas enriched with hydrogen is within a range of from 250 to 600 °C.

A still further aspect of the present invention resides in a process of purifying exhaust gas, comprising (a) providing a NOx reducing catalyst for reducing NOx in the presence of at least hydrogen serving as reducing agent, the NOx reducing catalyst being disposed in an exhaust gas passageway of a combustion device, the NOx reducing catalyst including a porous substrate, and platinum and cesium carried on the porous substrate; (b)enriching oxygen-excessive exhaust gas with hydrogen before the oxygen-excessive exhaust gas reaches the NOx reducing catalyst, the oxygen-excessive exhaust gas enriched with hydrogen being introduced through the exhaust gas passageway to the NOx reducing catalyst; and (c) causing the oxygen-excessive exhaust gas enriched with hydrogen to be brought into contact with the NOx reducing catalyst under a condition in which temperature of at least one of the NOx reducing catalyst and the oxygen-excessive exhaust gas enriched with hydrogen is within a range of from 250 to 600 °C.

BRIEF DESCRIPTION OF THE DRAWING

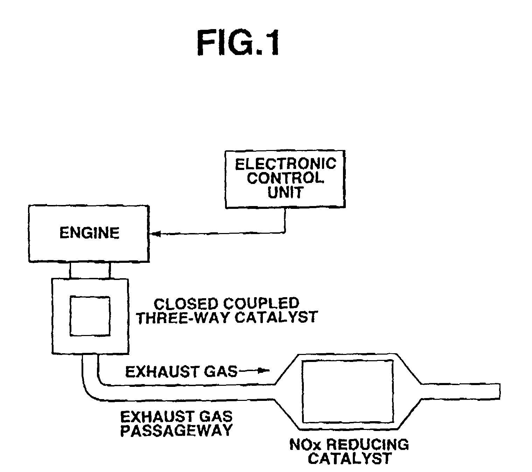

Fig. 1 is a schematic illustration of an engine system to which an exhaust gas purifying system according to the present invention is incorporated, usable for evaluation of performance of the exhaust gas purifying system.

DETAILED DESCRIPTION OF THE INVENTION

An exhaust gas purifying system according to the present invention comprises a NOx (nitrogen oxides) reducing catalyst for reducing NOx in the presence of at least H2 (hydrogen) serving as reducing agent. The NOx reducing catalyst is disposed in an exhaust gas passageway of a combustion device. The NOx reducing catalyst includes a porous substrate, and platinum and cesium carried on the porous substrate. The exhaust gas purifying system further comprises a device or means for enriching oxygen-excessive exhaust gas with hydrogen before the oxygen-excessive exhaust gas reaches the NOx reducing catalyst, the oxygen-excessive exhaust gas enriched with hydrogen being introduced through the exhaust gas passageway to the NOx reducing catalyst. Here, the oxygen-excessive exhaust gas enriched with hydrogen is brought into contact with the NOx reducing catalyst under a condition in which temperature of at least one of the NOx reducing catalyst and the oxygen-excessive exhaust gas enriched with hydrogen is within a range of from 250 to 600 °C.

The combustion device is an internal combustion engine for an automotive vehicle, or a burning device such as a furnace or a burner. The combustion device has the exhaust gas passageway through which exhaust gas from the combustion device flows. The NOx reducing catalyst is disposed in the exhaust gas passageway.

Hereinafter, the exhaust gas purifying system will be explained on a case that the combustion device is the engine.

The oxygen-excessive exhaust gas means exhaust gas having an air-fuel ratio (or oxygen-combustibles ratio) leaner than stoichiometric value, and therefore referred also as to "lean-burn exhaust gas (exhaust gas produced as a result of lean-burn operation of the engine)". It will be understood that air-fuel mixture having air-fuel ratio leaner than the stoichiometric value is supplied to combustion chambers or cylinders of the engine under the lean-burn operation.

Hitherto, a NOx trap catalyst or agent has been developed in order to reduce NOx in the oxygen-excessive exhaust gas as disclosed in Japanese Patent No. 2600492, in which the NOx trap catalyst can trap NOx in oxygen-excessive exhaust gas. However, when NOx trapped to the NOx trap catalyst is to be reduced, it is required that the oxygen concentration in exhaust gas is temporarily lowered under the rich spike process, thereby causing NOx trapped to the catalyst to release and allowing the released NOx to react with HC (hydrocarbons), CO (carbon monoxide) and/ or the like. However, in oxygen-excessive exhaust gas having a high oxygen concentration, HC and CO are oxidized with oxygen contained in exhaust gas so that HC and CO in exhaust gas are reduced, and therefore HC and CO serving as reducing agents cannot be sufficiently supplied to the catalyst. As a result, NOx will not be reduced by the catalyst and may be discharged as a part of exhaust gas to atmospheric air.

In contrast, according to the exhaust gas purifying system of the present invention, the oxygen-excessive exhaust gas enriched with hydrogen is supplied to the NOx reducing catalyst, thereby improving a NOx reducing efficiency. The oxygen-excessive exhaust gas enriched with hydrogen can be prepared by adding hydrogen to the oxygen-excessive exhaust gas or by raising the concentration of hydrogen in the oxygen-excessive exhaust gas. More specifically, a catalyst for producing hydrogen ($H_2$) by reforming HC and CO or a device for generating hydrogen ($H_2$) is preferably provided. Hydrogen ($H_2$) from the hydrogen producing catalyst or the hydrogen generating device is supplied into the exhaust gas passageway upstream of the NOx reducing catalyst. Such hydrogen from the hydrogen producing catalyst or the hydrogen generating device is used as reducing agents in the NOx reducing catalyst (may accompany with a small amount of HC and CO in exhaust gas), thereby effectively removing NOx, HC and CO.

The NOx reducing catalyst which uses at least hydrogen as reducing agent is constituted of the porous substrate which carries noble metal(s), alkali metal(s) and/or the like. It is preferable that the porous substrate carries at least platinum (Pt) for improving adsorption and activation of hydrogen and NOx in the NOx reducing catalyst. Such adsorption and activation improvement is assumed to result from the fact that platinum largely contributes to proceed selective reducing reaction for NOx by hydrogen.

In addition, the porous substrate carries cesium (Cs). Under mutual effects between cesium and platinum, activation of oxygen on platinum can be suppressed thereby making it possible to reduce NOx by hydrogen. Additionally, the character of Pt for adsorbing HC can be suppressed thereby improving the selective reactivity between hydrogen and NOx.

The porous substrate may carry other noble metals (such as Pd, Rh and/or the like) than Pt, and may carry other alkali metal(s) other than Cs and/or alkaline earth metal(s). Such alkali metal(s) and/or alkaline earth metal(s) may be carried together with Cs on the porous substrate.

In case of using conventional exhaust gas purifying catalysts, NOx has been able to be effectively reduced when the temperature of a NOx reducing catalyst and/or the oxygen-excessive exhaust gas enriched with hydrogen is lower than 150 °C, because activation of oxygen can be suppressed at such a temperature lower than 150 °C. However, when the temperature exceeds 150 °C, activation rate of oxygen is raised, and therefore reaction between $H_2$ and oxygen tends to readily occur as compared with reaction between $H_2$ and NO, so that occurrence of reduction reaction of NOx becomes difficult.

In contrast, according to the NOx reducing catalyst in the exhaust gas purifying system of the present invention, even when the temperature of the NOx reducing catalyst and/or the oxygen-excessive exhaust gas enriched with hydrogen exceeds 150 °C, activation of oxygen on Pt and adsorption of HC to Pt can be suppressed under the mutual effects between Pt and Cs, so that it is made possible to reduce NOx by hydrogen. It is to be noted that the NOx reducing catalyst of the present invention is arranged to purify exhaust gas in a further high temperature range of from 250 to 600 °C. If the temperature of the NOx reducing catalyst and/or the oxygen-excessive exhaust gas is lower than 250 °C, HC and CO in exhaust gas cannot be sufficiently oxidized since activity of oxygen on Pt is suppressed while NOx can be reduced as discussed above. If the temperature exceeds 600 °C, hydrogen and oxygen unavoidably directly react with each other so that NOx cannot be reduced.

Within the temperature range of from 250 to 600 °C, hydrogen and NOx can react with each other at a sufficiently practical rate while oxygen cannot participate in the reaction, and therefore reduction reaction of NOx can effectively proceed. This can suppress side reactions for producing noxious compounds such as ammonia; nitrogen dioxide ($NO_2$) and nitrous oxide (NO).

It will be understood that the exhaust gas purifying system of the present invention can purify exhaust gas even within a low temperature range lower than 150 °C as discussed above. However, at a further low temperature range lower than 90 °C, water produced under reduction reaction of NOx will condense to be accumulated on the catalyst thereby lowering NOx reducing efficiency.

Next, structure of the exhaust gas purifying system according to the present invention will be discussed.

As discussed above, in the exhaust gas purifying system according to the present invention, the oxygen-excessive exhaust gas is enriched with hydrogen. This enrichment is preferably accomplished by reforming HC and CO under action of a HC reforming device or means and a CO reforming device or means.

The HC reforming device includes a HC partial oxide producing device or means for producing partial oxide of HC by causing HC in the oxygen-excessive exhaust gas to react with oxygen at high temperatures, typically according to the following reaction formula (1):

$$HC + O_2 \rightarrow HC(O) + CO + H_2O \qquad (1)$$

where HC(O) represents partial oxide of HC, produced by partially oxidizing HC.

The CO reforming device is for producing hydrogen by causing CO in the oxygen-excessive exhaust gas to react with water, typically according to the following reaction formula (2):

$$CO + H_2O \rightarrow CO_2 + H_2 \qquad (2)$$

Under the action of the above HC reforming device and CO reforming device, hydrogen gas serving as the reducing agent for NOx can be produced thereby increasing the concentration of hydrogen in the oxygen-excessive exhaust gas. It is sufficient that the above HC reforming device and CO reforming device produce partial oxide of HC and makes CO reforming in combustion gas and/or exhaust gas. The combustion gas is burning gas within each cylinder of the engine. The HC reforming device and CO reforming device include ones of the combustion system and of the catalytic system.

The HC reforming device and the CO reforming device of the combustion system are arranged to control production of hydrogen gas and therefore preferably includes a device or means for controlling temperature and pressure of the oxygen-excessive exhaust gas and concentrations of oxygen, water, HC and CO in the oxygen-excessive exhaust gas. Such a controlling device include a device for controlling at least one of engine operating parameters such as fuel injection amount (amount of fuel injected from a fuel injector), fuel injection timing (timing at which fuel is injected from the fuel injector), spark timing (timing at which a spark plug generates spark), opening and/or closing timings of intake and/or exhaust valves of the engine. Such a controlling device is, for example, an electronic control unit (shown in Fig. 1) for electronically controlling the engine operating parameters in accordance with engine operating conditions including the conditions of exhaust gas flowing through the exhaust gas passageway.

The HC reforming device and the CO reforming device of the catalytic system preferably include a HC reforming catalyst section for causing the reaction represented by the reaction formula (1), and a CO reforming catalyst section for causing the reaction represented by the reaction formula (2). Although it is sufficient that catalyst components used in the HC reforming catalyst section and the CO reforming catalyst section can cause the reactions represented by the above reaction formulae (1) and (2), examples of the catalyst components are Pt, Pd, Rh, Ce and Zr. Preferably, the catalyst components used in the HC reforming catalyst section contains cerium (Ce) oxide carrying Pd, and the catalyst components used in the CO reforming catalyst section contains zirconium (Zr) oxide carrying Rh. It is preferable that the porous substrate carries Pd in an amount ranging 3 to 20 g, Rh in an amount ranging from 0.1 to 10 g, and Pt in an amount ranging from 0.1 to 2 g per one liter of the porous substrate (preferably a monolithic porous substrate). Thus, in the exhaust gas purifying system according to the present invention, an oxidizing catalyst or a three-way catalyst may be typically used as the HC and CO reforming device.

It will be understood that the HC and CO reforming devices of the combustion system and of the catalytic system may be used in combination. Additionally, a hydrogen gas generating device disposed outside of the exhaust gas passageway may be used in place of the HC and CO reforming devices in order to supply hydrogen gas into the oxygen-excessive exhaust gas. For example, the hydrogen gas generating device is a hydrogen gas bomb (container) disposed to supply hydrogen gas into the exhaust gas passageway upstream of the NOx reducing catalyst.

As discussed above, in operation of the exhaust gas purifying catalyst of the present invention, hydrogen gas ($H_2$) is used as the reducing agent in addition to HC and CO, so that hydrogen is positively supplied to the oxygen-excessive exhaust gas. In this connection, it is preferable that composition of the oxygen-excessive exhaust gas enriched with hydrogen, to be brought into contact with the NOx reducing catalyst, meets a relation represented by the following formula (3):

[(a concentration of hydrogen in the oxygen-excessive exhaust gas / a concentration of total reducing components in the oxygen-excessive exhaust gas) $\geq 0.3$] ... (3)

In the exhaust gas purifying system according to the present invention, almost whole HC in the exhaust gas can be oxidized, so that it is preferable that the exhaust gas to be introduced to the NOx reducing catalyst meets the relation represented by the following formula (4):

[(a concentration of HC in the oxygen-excessive exhaust gas / a concentration of total reducing components in the oxygen-excessive exhaust gas) $\leq 0.01$] ... (4)

Consequently, in the exhaust gas purifying system according to the present invention, almost whole HC can be oxidized in the exhaust gas passageway upstream of the NOx reducing catalyst, so that it is unnecessary to oxidize HC in the NOx reducing catalyst.

In case of using the above hydrogen gas generating device, the composition of the oxygen-excessive exhaust gas enriched with hydrogen, to be brought into contact with the NOx reducing catalyst, can meet the relation represented by the above formula (3) by supplying hydrogen gas into the exhaust gas.

It will be understood that the oxygen-excessive exhaust gas to be introduced to the NOx reducing catalyst may contain water vapor, carbon dioxide gas and the like if the composition of the oxygen-excessive exhaust gas to be introduced to the NOx reducing catalyst can meet the relation represented by the above formula (3).

Next, the NOx reducing catalyst as the exhaust gas purifying catalyst of the present invention will be discussed.

The NOx reducing catalyst is disposed in the exhaust gas passageway so as to be supplied with the oxygen-excessive exhaust gas enriched with hydrogen. In the NOx reducing catalyst, it is preferable that Cs and Pt are carried on the porous substrate in a mol ratio of Cs / Pt $\geq 0.5$ / 1. With the mol ratio of Cs / Pt $\geq 0.5$ / 1, a large amount of mutually effected sites of the noble metal element-Cs system exist on the surface of the NOx reducing catalyst, and therefore the catalyst can exhibit further excellent NOx reducing activity. However, if the ratio is Cs / Pt < 0.5 / 1, the mutual effects between the noble metal and Cs are weak so that NOx reducing action is degraded at a high temperature region of not lower than 250 °C. If the mol ratio is Cs / Pt $\geq 20$, NOx reducing activity can be exhibited while no improvement in reducing activity can be hardly found.

It will be appreciated that the porous substrate of the NOx reducing catalyst may carry Rh, Pd and/or the like as the noble metal in addition to Pt. The amount of the noble metal(s) is not limited to a particular range, in which it is practically preferable that the noble metal(s) is carried in an amount ranging from 0.1 to 20 % by weight relative to the porous substrate. The porous substrate is preferably a monolithic substrate formed of heat resistant material. The monolithic substrate is preferably of a honeycomb-type. The heat resistant material is preferably ceramic material such as cordierite ceramic, or metal such as ferrite stainless steel. However, the heat resistant material is not limited to the above ones. The honeycomb-type monolithic substrate is formed with a plurality of cells which axially extend. Each cell is defined by thin walls which axially extend.

It is also preferable that the noble metal element(s) are carried on porous carrier (powder) which is formed as a layer on the surface of the porous substrate (monolithic substrate) in order to improve dispersibility of the noble metal element(s) and to increase a reactive surface area. Examples of such porous carrier (powder) are alumina (including activated alumina), silica-alumina and zeolite, and any mixtures thereof. Of these, the activated alumina is the most preferable. Furthermore, rare earth element(s), zirconium and/or the like may be added to the porous carrier in order to increase the heat resistance of the porous carrier so as to keep a high specific surface area of the porous carrier. The amount of the porous carrier to be used in the NOx reducing catalyst is preferably within a range of from 50 to 300 g per one liter of the monolithic substrate.

In a process of purifying exhaust gas by the exhaust gas purifying system according to the present invention, in order to effectively reduce NOx in the oxygen-excessive exhaust gas enriched with hydrogen, the NOx reducing catalyst and/or the oxygen-excessive exhaust gas are at a temperature within a range of from 250 to 600 °C, in which the NOx reducing catalyst is preferably at the temperature within a range of from 250 to 500 °C at which range the efficiency of reducing NOx can be largely improved.

<u>EXAMPLES</u>

The present invention will be more readily understood with reference to the following Examples in comparison with Comparative Examples; however, these Examples are intended to illustrate the invention and are not to be construed to limit the scope of the invention.

EXAMPLE 1

(A) Preparation of a Closed Coupled Three-way Catalyst (HC and CO Reforming Devices)

Pt, Pd and Rh (noble metals) and Ce and Zr (added components) were carried on activated alumina powder thereby to prepare catalytic powder. The catalytic powder was formed into slurry. This slurry was coated on a ceramic honeycomb-type monolithic substrate having a volume of 1.3 liters and formed with a plurality of axially extending cells each of which is defined by axially extending thin walls, so that the walls of the cells were coated with the slurry. Thereafter, the coated monolithic substrate was blown with air stream to remove excessive slurry in the cells, and dried at 130 °C and then fired at 400 °C for 1 hour. As a result, a closed coupled three-way catalyst was obtained carrying the noble metals in a total amount of 500 g per one cubic feet of the monolithic substrate, in which a weight ratio of Pt / Pd / Rh was 1 / 100 / 4. The closed coupled three-way catalyst was designed to be disposed closed and coupled to an exhaust manifold of the engine and therefore located upstream of the NOx reducing catalyst.

(B) Preparation of NOx Reducing Catalyst

Activated alumina powder was impregnated with an aqueous solution of Pd nitrate, and dried and then fired in air at 400 °C for 1 hour thereby to form Pd-carried alumina powder (Powder 1) whose concentration of Pd carried was 4 % by weight.
Activated alumina powder was impregnated with an aqueous solution of dinitrodiammine platinum, and dried and then fired in air at 400 °C for 1 hour thereby to form Pt-carried alumina powder (Powder 2) whose concentration of Pt carried was 6 % by weight.
Additionally, activated alumina powder was impregnated with an aqueous solution of Rh nitrate, and dried and then fired in air at 400 °C for 1 hour thereby to form Rh-carried alumina powder (Powder 3) whose concentration of Rh carried was 4 % by weight.
Subsequently, a porcelain ball mill was charged with 64 g of Powder 1, 107 g of Powder 2, 16 g of Powder 3, 13 g of alumina and 200 g of water, followed by mixing and pulverizing, thereby obtaining slurry containing powder materials whose average particle size was 3.2 μm. This slurry was coated on a cordierite ceramic honeycomb-type monolithic substrate having a volume of 1.3 liters and 400 (axially extending) cells per square inch, so that thin walls of cells were coated with the slurry. Thereafter, the coated monolithic substrate was blown with air stream to remove excessive slurry in the cells, and dried at 130 °C and then fired at 400 °C for 1 hour. As a result, a catalyst A was prepared in which a catalytic coat layer was formed on the wall of the cells of the monolithic substrate. The weight of the catalytic coat layer was 110 g per one liter of the monolithic carrier.
Next, a porcelain ball mill was charged with 64 g of Powder 1, 54 g of Powder 2, 82 g of alumina and 200 g of water, followed by mixing and pulverizing, thereby obtaining slurry containing powder materials whose average particle size was 3.2 μ m. This slurry was coated on the catalyst A, so that the walls of the cells were coated with the slurry. Thereafter, the coated monolithic carrier was blown with air stream to remove excessive slurry in the cells, and dried at 130 °C and then fired at 400 °C for 1 hour. As a result, a catalyst B was prepared in which a catalytic coat layer was formed on the catalytic layer of the catalyst A. The weight of total catalytic coat layers was 330 g per one liter of the monolithic carrier.
Further, the catalyst B was impregnated with an aqueous solution of cesium carbonate. Then, the coated monolithic substrate was dried at 130 °C, and then fired at 400 °C for 1 hour. As a result, a catalyst C (NOx reducing catalyst) was prepared carrying 30 g of Cs (calculated as oxide) per one liter of the monolithic substrate.

(3) Construction of Exhaust gas purifying system

As shown in Fig. 1, the closed coupled three-way catalyst was disposed in an exhaust gas passageway leading from a cylinder direct injection internal combustion engine (identified as "ENGINE"). The closed coupled three-way catalyst was located close to and coupled to an exhaust manifold of the engine. The NOx reducing catalyst was disposed in the exhaust gas passageway and located downstream of the closed coupled three-way catalyst.

EXAMPLE 2

A closed coupled catalyst was prepared in the same manner as that in Example 1.

A NOx reducing catalyst was prepared by repeating the procedure for preparation of that in Example 1 with the exception that 15 g of Cs was carried per one liter of the monolithic substrate.

An exhaust gas purifying system of Example 2 was constructed similarly to that in Example 1.

EXAMPLE 3

A closed coupled catalyst was prepared in the same manner as that in Example 1.

A NOx reducing catalyst was prepared by repeating the procedure for preparation of that in Example 1 with the exception that the catalyst C was further impregnated with barium acetate and magnesium acetate so that 10 g of Ba (calculated as oxide) and 5 g of Mg (calculated as oxide) were carried per one liter of the monolithic substrate.

An exhaust gas purifying system of Example 3 was constructed similarly to that in Example 1.

EXAMPLE 4

A closed coupled catalyst was prepared in the same manner as that in Example 1.

Preparation of a NOx reducing catalyst was made as follows:

Activated alumina powder was impregnated with an aqueous solution of Pd nitrate, and dried and then fired in air at 400 °C for 1 hour thereby to form Pd-carried alumina powder (Powder 1) whose concentration of Pd carried was 2 % by weight.

Activated alumina powder was impregnated with an aqueous solution of dinitrodiammine platinum, and dried and then fired in air at 400 °C for 1 hour thereby to form Pt-carried alumina powder (Powder 2) whose concentration of Pt carried was 3 % by weight.

Additionally, activated alumina powder was impregnated with an aqueous solution of Rh nitrate, and dried and then fired in air at 400 °C for 1 hour thereby to form Rh-carried alumina powder (Powder 3) whose concentration of Rh carried was 2 % by weight.

Subsequently, a porcelain ball mill was charged with 64 g of Powder 1, 107 g of Powder 2, 16 g of Powder 3, 13 g of alumina and 200 g of water, followed by mixing and pulverizing, thereby obtaining slurry containing powder materials whose average particle size was 3.2 $\mu$m. This slurry was coated on a cordierite ceramic honeycomb-type monolithic substrate having a volume of 1.3 liters and 400 (axially extending) cells per square inch, so that thin walls of cells were coated with the slurry. Thereafter, the coated monolithic substrate was blown with air stream to remove excessive slurry in the cells, and dried at 130 °C and then fired at 400 °C for 1 hour. As a result, a catalyst A was prepared in which a catalytic coat layer was formed on the wall of the cells of the monolithic substrate. The weight of the catalytic coat layer was 110 g per one liter of the monolithic carrier.

Next, a porcelain ball mill was charged with 64 g of Powder 1, 54 g of Powder 2, 82 g of alumina and 200 g of water, followed by mixing and pulverizing, thereby obtaining slurry containing powder materials whose average particle size was 3.2 $\mu$ m. This slurry was coated on the catalyst A, so that the walls of the cells were coated with the slurry. Thereafter, the coated monolithic carrier was blown with air stream to remove excessive slurry in the cells, and dried at 130 °C and then fired at 400 °C for 1 hour. As a result, a catalyst B was prepared in which a catalytic coat layer was formed on the catalytic layer of the catalyst A. The weight of total catalytic coat layers was 330 g per one liter of the monolithic carrier.

Further, the catalyst B was impregnated with an aqueous solution of cesium carbonate. Then, the coated monolithic substrate was dried at 130 °C, and then fired at 400 °C for 1 hour. As a result, a catalyst C (NOx reducing catalyst) was prepared carrying 30 g of Cs (calculated as oxide) per one liter of the monolithic substrate.

An exhaust gas purifying system of Example 4 was constructed similarly to that in Example 1.

EXAMPLE 5

A closed coupled catalyst was prepared in the same manner as that in Example 1.

A NOx reducing catalyst was prepared by repeating the procedure for preparation of that in Example 4 with the exception that the catalyst C was further impregnated with barium acetate and magnesium acetate so that 10 g of Ba (calculated as oxide) and 5 g of Mg (calculated as oxide) were carried per one liter of the monolithic substrate.

An exhaust gas purifying system of Example 5 was constructed similarly to that in Example 1.

COMPARATIVE EXAMPLE 1

A closed coupled catalyst was prepared in the same manner as that in Example 1.

A NOx reducing catalyst was prepared by repeating the procedure for preparation of that in Example 1 with the exception that 5 g of Cs was carried per one liter of the monolithic substrate.

An exhaust gas purifying system of Comparative Example 1 was constructed similarly to that in Example 1.

COMPARATIVE EXAMPLE 2

A closed coupled catalyst was prepared in the same manner as that in Example 1.

A NOx reducing catalyst was prepared by repeating the procedure for preparation of that in Example 1 with the exception that no Cs was carried.

An exhaust gas purifying system of Comparative Example 2 was constructed similarly to that in Example 1.

COMPARATIVE EXAMPLE 3

A closed coupled catalyst was prepared in the same manner as that in Example 1.

A NOx reducing catalyst was prepared in the same manner as that in Example 1.

An exhaust gas purifying system of Comparative Example 1 was constructed similarly to that in Example 1. The exhaust gas purifying system of Comparative Example 3 will be subjected to an emission performance evaluation test (discussed hereinafter) at a temperature range different from that for Example 1.

EVALUATION OF PERFORMANCE OF EXHAUST GAS PURIFYING SYSTEM

Evaluation test (for emission performance) was conducted on the exhaust gas purifying systems of Examples and Comparative Examples, using an evaluation engine system as shown in Fig. 1. For the evaluation test, each exhaust gas purifying system was incorporated in the evaluation engine system including the engine which was a cylinder direct injection internal combustion engine having a displacement of 1.8 liters and produced by Nissan Motor Co., Ltd. In the cylinder direct injection internal combustion engine, fuel was directly injected into each cylinder of the engine.

Prior to the evaluation test, the closed coupled three-way catalyst and the NOx reducing catalyst of Examples and Comparative Example underwent a durability test in which the both catalysts were disposed in an exhaust gas passageway connected to an internal combustion engine produced by Nissan Motor Co., Ltd, in such a manner as to be shown in Fig. 1. In the durability test, the engine was operated under the following test conditions:

Displacement of the engine: 3,000 cc;
Fuel: "Nisseki Dasshu Gasoline" produced by Nippon Oil Co., Ltd. and having a Pb content of 0 mg/usg (US gallon) and a S content of not more than 30 ppm;
Temperature of gas to be supplied to the catalyst: 650 °C; and
Time of operation of the engine: 50 hours.

Then, the catalyst 1 undergone the durability test was subjected to the emission performance evaluation test conducted under a test mode "FTP-75 (LA-4) mode" employed in the Unites States of America. In this test, the exhaust gas purifying system was incorporated in the evaluation engine system of Fig. 1. In the emission performance evaluation test, each of the closed coupled three-way catalyst and the NOx reducing catalyst had the volume of 1.3 liters. In the emission performance evaluation test, a concentration A of gas components (HC, CO and NOx) in exhaust gas from the engine in a state where no exhaust gas purifying system was provided was measured, and a concentration B in exhaust gas emitted from the NOx reducing catalyst in Fig. 1 was measured, thereby obtaining a "remaining rate (%)" of the gas components, shown in Table 1. The remaining rate (%) was calculated by [(the concentration B of the gas component / the concentration A of the gas component) x 100], in which the concentrations were measured as "ppm". Table 2 shows catalytic compositions of the NOx reducing catalysts of Examples and Comparative Examples, in which "Carried noble metals (g/l.)" indicates the amount (g) of noble metals carried per one liter of the monolithic substrate of each NOx reducing catalyst; "Cs (mol/l.)" indicates the amount (mol) of Cs carried per one liter of the monolithic substrate of each NOx reducing catalyst; and "Cs mol ratio" indicates the mol ratio of Cs (in the NOx reducing catalyst) relative to the total noble metals (in the NOx reducing catalyst). Table 2 further shows temperature ranges ("Exhaust gas temperature (°C)") of exhaust gas in the exhaust gas passageway immediately upstream of the NOx reducing catalysts in the emission performance evaluation test. In other words, the concentration B in exhaust gas was measured at the temperature range shown in Table 2.

TABLE 1

| Exhaust gas purifying System | Remaining rate (%) | | |
|---|---|---|---|
| | HC | CO | NO |
| Example 1 | 1.3 % | 2.0 % | 2.5 % |
| Example 2 | 1.1 % | 2.0 % | 2.9% |
| Example 3 | 1.1 % | 2.0 % | 2.0 % |
| Example 4 | 1.1% | 2,0 % | 2.4 % |
| Example 5 | 1.1% | 2.0 % | 2.2 % |
| Comp. Example 1 | 1.1 % | 1.8% | 5.1 % |
| Comp. Example 2 | 4.0 % | 7.0 % | 7.1 % |
| Comp. Example 3 | 5.1 % | 7.7 % | 2.4 % |

TABLE 2

| Exhaust gas purifying system | Carried noble metals (g/l.) | | | Cs (mol/l.) | Cs mol ratio | Exhaust gas temperature (°C) |
|---|---|---|---|---|---|---|
| | Pt | Pd | Rh | | | |
| Example 1 | 5.3 | 2.8 | 2.8 | 0.21 | 1.39 | 250-450 |
| Example 2 | 5.3 | 2.8 | 2.8 | 0.11 | 0.73 | 250 - 450 |
| Example 3 | 5.3 | 2.8 | 2.8 | 0.21 | 1.39 | 250-450 |
| Example 4 | 2.7 | 1.4 | 1.4 | 0.21 | 2.78 | 250 - 450 |
| Example 5 | 2.7 | 1.4 | 1.4 | 0.21 | 2.78 | 250 - 450 |
| Comp. Example 1 | 5.3 | 2.8 | 2.8 | 0.035 | 0.023 | 250-450 |
| Comp. Example 2 | 5.3 | 2.8 | 2.8 | 0 | 1.39 | 250-450 |
| Comp. Example 3 | 5.3 | 2.8 | 2.8 | 0.21 | 1.39 | Not higher than 200 |

As will be apparent from the above, according to the present invention, for example, the catalyst for accomplishing HC and CO reforming reactions is disposed in the exhaust gas passageway leading from the combustion device so as to produce hydrogen, and the specified NOx reducing catalyst is disposed in the exhaust gas passageway downstream of the catalyst, in which the oxygen-excessive exhaust gas discharged under lean-burn operation of the combustion device and enriched with hydrogen is supplied into the exhaust gas passageway upstream of the NOx reducing catalyst. As a result, NOx, HC and CO in the oxygen-excessive exhaust gas can be effectively removed even under a high temperature condition higher than 250 °C while obtaining a high fuel economy improvement effect

The entire contents of Japanese Patent Application P11-356602 (filed December 15, 1999) are incorporated herein by reference.

Although the invention has been described above by reference to certain embodiments and examples of the invention, the invention is not limited to the embodiments described above. Modifications and variations of the embodiments and examples described above will occur to those skilled in the art, in light of the above teachings. The scope of the invention is defined with reference to the following claims.

**Claims**

1.    An exhaust gas purifying system comprising:

   a NOx reducing catalyst for reducing NOx in presence of at least hydrogen serving as reducing agent, said NOx reducing catalyst being disposed in an exhaust gas passageway of a combustion device, said NOx reducing catalyst including a porous substrate, and platinum and cesium carried on said porous substrate; and

a device for enriching oxygen-excessive exhaust gas with hydrogen before the oxygen-excessive exhaust gas reaches said NOx reducing catalyst, the oxygen-excessive exhaust gas enriched with hydrogen being introduced through the exhaust gas passageway to said NOx reducing catalyst;

wherein the oxygen-excessive exhaust gas enriched with hydrogen is brought into contact with said NOx reducing catalyst under a condition in which temperature of at least one of said NOx reducing catalyst and the oxygen-excessive exhaust gas enriched with hydrogen is within a range of from 250 to 600 °C.

2. An exhaust gas purifying system as claimed in Claim 1, wherein said enriching device includes a device for reforming HC and CO, arranged to produce partial oxide of HC and to reform CO in the oxygen-excessive exhaust gas.

3. An exhaust gas purifying system as claimed in Claim 1 or 2, wherein said HC and CO reforming device includes a device for controlling temperature and pressure of the oxygen-excessive exhaust gas and concentration of oxygen, water, HC and CO in the oxygen-excessive exhaust gas.

4. An exhaust gas purifying system as claimed in any of Claims 1 to 3, wherein said HC and CO reforming device includes a catalyst disposed in the exhaust gas passageway, said catalyst being arranged to produce hydrogen from at least one of HC and CO in the oxygen-excessive exhaust gas.

5. An exhaust gas purifying system as claimed in any of Claims 1 to 4, further comprising a device for controlling the oxygen-excessive exhaust gas enriched with hydrogen in a manner that composition of the oxygen-excessive exhaust gas enriched with hydrogen, to be brought into contact with the NOx reducing catalyst, meets a relation represented by a formula [(a concentration of hydrogen / a concentration of total reducing components in the oxygen-excessive exhaust gas) ≥ 0.3].

6. An exhaust gas purifying system comprising:

a NOx reducing catalyst for reducing NOx in presence of at least hydrogen serving as reducing agent, said NOx reducing catalyst being disposed in an exhaust gas passageway of a combustion device, said NOx reducing catalyst including a porous substrate, and platinum and cesium carried on said porous substrate;
means for enriching oxygen-excessive exhaust gas with hydrogen before the oxygen-excessive exhaust gas reaches said NOx reducing catalyst, the oxygen-excessive exhaust gas enriched with hydrogen being introduced to said NOx reducing catalyst; and
means for causing the oxygen-excessive exhaust gas enriched with hydrogen to be brought into contact with said NOx reducing catalyst under a condition in which temperature of at least one of said NOx reducing catalyst and the oxygen-excessive exhaust gas enriched with hydrogen is within a range of from 250 to 600 °C.

7. An exhaust gas purifying system for an internal combustion engine, comprising:

a NOx reducing catalyst for reducing NOx in presence of at least hydrogen serving as reducing agent, said NOx reducing catalyst being disposed in an exhaust gas passageway of the engine, said NOx reducing catalyst including a porous substrate, and platinum and cesium carried on said porous substrate; and
at least one of a control unit for controlling engine operating parameters of the engine and a catalyst disposed in the exhaust gas passageway upstream of said NOx reducing catalyst, said control unit and catalyst being arranged to enrich oxygen-excessive exhaust gas with hydrogen before the oxygen-excessive exhaust gas reaches said NOx reducing catalyst, the oxygen-excessive exhaust gas enriched with hydrogen being introduced through the exhaust gas passageway to said NOx reducing catalyst;
wherein the oxygen-excessive exhaust gas enriched with hydrogen is brought into contact with said NOx reducing catalyst under a condition in which temperature of at least one of said NOx reducing catalyst and the oxygen-excessive exhaust gas enriched with hydrogen is within a range of from 250 to 600 °C.

8. A catalyst for reducing NOx in an exhaust gas purifying system including a device for enriching oxygen-excessive exhaust gas with hydrogen, the oxygen-excessive exhaust gas flowing through an exhaust gas passageway of a combustion device,

said NOx reducing catalyst functioning in the presence of at least hydrogen, serving as reducing agent, which is in the oxygen-excessive exhaust gas enriched with hydrogen, said NOx reducing catalyst being disposed in the exhaust gas passageway and including a porous substrate, and platinum and cesium carried on said porous substrate in a mol ratio of cesium / platinum $\geq 0.5 / 1$,

wherein the oxygen-excessive exhaust gas enriched with hydrogen is brought into contact with said NOx reducing catalyst under a condition in which temperature of at least one of said NOx reducing catalyst and the oxygen-excessive exhaust gas enriched with hydrogen is within a range of from 250 to 600 °C.

9.  A process of purifying exhaust gas, comprising:

providing a NOx reducing catalyst for reducing NOx in presence of at least hydrogen serving as reducing agent, said NOx reducing catalyst being disposed in an exhaust gas passageway of a combustion device, said NOx reducing catalyst including a porous substrate, and platinum and cesium carried on said porous substrate;

enriching oxygen-excessive exhaust gas with hydrogen before the oxygen-excessive exhaust gas reaches said NOx reducing catalyst, the oxygen-excessive exhaust gas enriched with hydrogen being introduced through the exhaust gas passageway to said NOx reducing catalyst; and

causing the oxygen-excessive exhaust gas enriched with hydrogen to be brought into contact with said NOx reducing catalyst under a condition in which temperature of at least one of said NOx reducing catalyst and the oxygen-excessive exhaust gas enriched with hydrogen is within a range of from 250 to 600 °C.

# FIG.1

ELECTRONIC CONTROL UNIT

ENGINE

CLOSED COUPLED THREE-WAY CATALYST

EXHAUST GAS →

EXHAUST GAS PASSAGEWAY

NOx REDUCING CATALYST